# EUROPÄISCHE PATENTSCHRIFT

(11) **EP 3 802 382 B1**
(45) Veröffentlichungstag und Bekanntmachung des Hinweises auf die Patenterteilung: **13.09.2023**
(21) Anmeldenummer: 19752423.4
(22) Anmeldetag: 04.06.2019
(51) Int. Cl.: B65G 47/53, B65G 47/88, B65G 15/10

(54) **FÖRDEREINRICHTUNG UND VERFAHREN ZUM FÖRDERN VON TAMPON-APPLIKATOREN**
CONVEYING APPARATUS AND METHOD OF CONVEYING TAMPON APPLICATORS
DISPOSITIF DE TRANSPORT ET PROCÉDÉ DE TRANSPORT D'APPLICATEURS DE TAMPON

(30) Priorität: 05.06.2018 CH 7132018
(43) Veröffentlichungstag der Anmeldung: 14.04.2021
(73) Patentinhaber: Ruggli Projects AG, 6332 Hagendorn (CH)
(72) Erfinder: SCHULER, Samuel, 4051 Basel (CH); ZUDDAS, Antonello, 8212 Neuhausen am Rheinfall (CH)
(74) Vertreter: IPrime Rentsch Kaelin AG
(86) Internationale Anmeldenummer: PCT/EP2019/064443
(87) Internationale Veröffentlichungsnummer: WO 2019/233989

(56) Entgegenhaltungen:
- EP-A1- 3 064 455
- DE-A1- 4 119 790
- DE-A1- 4 335 195
- DE-U1- 29 506 230
- GB-A- 1 389 820
- JP-A- S6 337 023
- KR-B1- 101 840 007
- NL-A- 9 000 982
- US-A1- 2003 146 071

## Beschreibung

Die vorliegende Erfindung betrifft eine Fördereinrichtung für Tampon-Applikatoren, sowie ein Verfahren zum Fördern von Tampon-Applikatoren, insbesondere in einer Fertigungsstrasse für Tampons mit Applikatoren, alles gemäss den Oberbegriffen der unabhängigen Patentansprüche.

### Technologischer Hintergrund

Tampon-Applikatoren sind meistens aus Kunststoff bestehende, röhrenförmige Einführhilfen für Tampons. In ihrer einfachsten Bauweise weisen sie einen Hülsenkörper mit einer distalen Öffnung auf, durch welche der Tampon nach dem Platzieren in die Körperöffnung entlassen wird, auf. Das Ausstossen des Tampons geschieht mittels eines proximal angelegten Stössels. Das Einschieben des Stössels in den Hülsenkörper drückt den darin enthaltenen Tampon durch die besagte distale Öffnung. Ausgereiftere Formen verfügen über ein abgerundetes distales Kopfende, welches mit Einschnitten versehen ist, die sich beim Herausdrücken des Tampons blütenartig öffnen. Auch Griffmulden oder gerippte Abschnitte gehören inzwischen zu den standardmässigen Ausgestaltungen, um die Anwendbarkeit zu erleichtern. Oft handelt es sich beim Stössel um ein Röhrchen, durch welches ein Rückholfaden des Tampons geführt ist. In der Anwendung wird dieser in der Hand behalten, so dass er sicher platziert werden kann.

Die vorliegende Erfindung ist zum Beispiel für Tampons mit Applikatoren geeignet, wie sie in der EP 3'016'623 A1 oder EP 2'389'437 B1 gezeigt sind US 2003/146071 A1 offenbart eine Fördereinrichtung gemäß dem Oberbegriff des Anspruchs 1.

In der Herstellung von Applikator-Tampons, also Tampons die konfektioniert in Applikatoren vertrieben werden, werden die üblicherweise in einem Spritzguss-Verfahren hergestellten Tampon-Applikatoren zunächst als loses Gut der Fertigung zugeführt.

Aus dem Stand der Technik sind Systeme für die Förderung von Tampon-Applikatoren in einer Fertigungsstrasse bekannt. Die gängigen Lösungen sehen nach einem ersten Sortierungsschritt eine Förderung über Förderbahnen vor. Damit die einzelnen Tampon-Applikatoren nicht vom Förderband fallen, ist bei solchen Lösungen eine seitliche Führung vorgesehen. Die Förderbänder nehmen in den Fertigungsstrassen zudem ein grosses Volumen ein. Zwischenstationen, um die unsortiert eingeschütteten Tampon-Applikatoren zu sortieren, müssen ebenfalls vorgesehen sein. Grundsätzlich ist es bei Tampon-Applikatoren so, dass sie in einer bestimmten Orientierung der Bestückung mit den Tampons zugeführt werden müssen. Da die Tampon-Applikatoren in den meisten Fällen als loses Gut aus dem Spritzguss in die Bestückung gelangen, müssen die zufällig auf dem ersten Förderband orientierten Tampon-Applikatoren in eine einheitliche Orientierung gebracht werden. Bei hochwertigen Materialien besteht zudem durch die Seitenbegrenzungen die Gefahr, dass die Tampon-Applikatoren Schaden nehmen. Auch kann es vorkommen, dass einzelne Tampon-Applikatoren mit anderen verhakt sind. Die Vereinzelung auf solchen Förderbändern gestaltet sich aufwendig und fehleranfällig. Ein fehlerhaft orientierter Applikator kann die gesamte Bestückungseinheit zum Stillstand führen.

Es besteht somit ein Bedarf an Vorrichtungen und Verfahren zur Förderung und Zuführung von Tampon-Applikatoren in einer Applikator-Tampon-Fertigungsstrasse, welche effizient zu betreiben sind und einen schonenden Umgang mit den Applikatoren ermöglichen.

### Darstellung der Erfindung

Es ist somit eine Aufgabe der vorliegenden Erfindung, mindestens einen Nachteil des Bekannten zu überwinden. Insbesondere soll eine Fördereinrichtung für Tampon-Applikatoren und ein Verfahren zum Fördern von Tampon-Applikatoren bereitgestellt werden, welches den hohen Anforderungen einer kontinuierlichen Bestückung von Tampon-Applikatoren entgegenkommt und dabei eine schonende Handhabung der Tampon-Applikatoren ermöglicht.

Diese Aufgabe wurde mit einer Fördereinrichtung für Tampon-Applikatoren und einem Verfahren zum Fördern von Tampon-Applikatoren gemäss kennzeichnendem Teil der unabhängigen Ansprüche gelöst.

Ein Aspekt der vorliegenden Erfindung betrifft eine Fördereinrichtung für Tampon-Applikatoren. Die erfindungsgemässe Fördereinrichtung weist eine erste Förderbahn auf. Diese Förderbahn umfasst weiter zwei voneinander beabstandet angeordnete Transportriemen mit je einer Lagerachse, insbesondere einer gemeinsamen Lagerachse.

Die Fördereinrichtung umfasst weiter einen ersten Förderantrieb zum Antreiben von mindestens einem der zwei voneinander beabstandeten Transportriemen. Dabei sind die Transportriemen derart voneinander beabstandet angeordnet, dass ein zu fördernder Tampon-Applikator in einem Zwischenraum zwischen den Transportriemen auf beiden Transportriemen aufliegt. Die erfindungsgemässe Fördereinrichtung ist weiter so ausgestaltet, dass die Lagerachsen der Transportriemen einer Förderbahn parallel angeordnet sind. Insbesondere sind alle Lagerachsen der Transportriemen einer Förderbahn, und/oder aller Förderbahnen welche in die gleiche Förderrichtung fördern, parallel angeordnet. Insbesondere sind alle Lagerachsen der Förderbahnen welche in eine gleiche Förderrichtung fördern parallel angeordnet. Besonders bevorzugt sind alle Lagerachsen die parallel angeordnet über einen gemeinsamen Förderantrieb angetrieben.

Die erfindungsgemässe Fördereinrichtung ermöglicht ein Fördern von Tampon-Applikatoren, das besonders schonend für die geförderten Applikatoren ist. So ist durch den Kontakt mit den beiden Riemen im Wesentlichen keine Gleitreibung mit dem Fördermittel vorhanden, was besonders bei qualitativ hochwertigen Materialien schonend zum Produkt ist. Ausserdem lässt sich die erfindungsgemässe Fördereinrichtung besonders platzsparend installieren, da die einzelnen Förderbahnen nur unwesentlich breiter sind als die zu fördernden Tampon-Applikatoren. Das ganze System kann auch besonders einfach gewartet werden. Eventueller Abrieb und Schmutz fällt zwischen die einzelnen Transportriemen herunter, sodass die beförderten Tampon-Applikatoren nicht durch Staub und Abrieb beeinflusst werden. Durch die Verwendung von Transportriemen ist das System bei der Installation und der Wartung auch leichter in Betrieb zu nehmen, da das Verspannen von Transportriemen weniger aufwendig ist, als das Einrichten von Förderbändern. Die erfindungsgemässe Fördereinrichtung kann zudem mit parallel angeordneten Förderbahnen an die spezifischen Zufuhrerfordernisse einer nachfolgenden Bestückungsstation modular angepasst werden. Die Förderbahnen können nicht nur in einer Horizontalen parallel zueinander, sondern auch in der Vertikalen und Diagonalen gestapelt angeordnet werden.

Im Sinne der vorliegenden Erfindung handelt es sich bei den Transportriemen bevorzugt um umlaufend angeordnete geschlossene Rundriemen. Allerdings können in besonderen Ausführungsformen auch Transportriemen vorgesehen sein, welche keinen Runden Querschnitt aufweisen, sondern einen im Wesentlichen radialsymmetrischen Querschnitt aufweisen.

Die Transportriemen können bevorzugt aus einem Kunststoffmaterial gefertigt sein, besonders bevorzugt aus einem PU-Kunststoff. Besonders bevorzugt sind die Transportriemen aus einem elastischen Kunststoff. Durch die Verwendung von elastischen Transportriemen, insbesondere Rundriemen, entfällt ein aufwendiges Verspannen, wie es zum Beispiel in Förderbändern erforderlich ist. Die Rundriemen können zum Beispiel mit Hilfe von Spannungsrollen verspannt werden.

Im Sinne der vorliegenden Erfindung kann unter zwei voneinander beabstandet angeordneten Transportriemen jede Anordnung verstanden werden, bei der für die beiden betreffenden Transportriemen über ihre gesamte Längsachse kein physischer Kontakt zwischen den betreffenden Transportriemen vorgesehen ist. Dies kann bereits ab einem minimalen Zwischenraum bestehen, von z.B. ab 1 mm, bis zu einem Zwischenraum, bei denen ein Tampon-Applikator gerade noch aufliegt ohne hindurchzufallen. Bevorzugt beträgt der Zwischenraum zwischen **1** mm und **15** mm, besonderes bevorzugt zwischen 2 mm und 13 mm, weiter bevorzugt zwischen 4 mm und 8 mm, insbesondere 7.5 mm. In einer weiteren besonderen Ausführungsform beträgt ein Mittelpunktabstand zwischen dem Mittelpunkt des Querschnitts senkrecht zur Längsrichtung eines ersten Transportriemens zum entsprechenden Mittelpunkt des parallel angeordneten Transportriemens im Wesentlichen 13 mm.

Im Sinne der vorliegenden Erfindung kann unter einem Aufliegen eines zu fördernden Tampon-Applikators auf beiden Transportriemen verstanden werden, dass der besagte Tampon-Applikator mindestens einen physischen Kontakt mit jedem der beiden Transportriemen eingeht. Je nach Geometrie des zu fördernden Tampon-Applikators kann dies aber bedeuten, dass jeder der beiden Transportriemen mehr als einen physischen Kontakt mit dem Tampon-Applikator aufweisen kann. So können bei Tampon-Applikatoren, die über eine Griffmulde verfügen, mehrere physische Kontakte zu einem Transportriemen bestehen. Unter einem Förderantrieb kann im Sinne der vorliegenden Erfindung ein Antrieb verstanden werden, der geeignet ist die Transportriemen entlang einer Förderrichtung auf seiner Lagerachse anzutreiben.

In einer besonderen Ausführungsform umfasst der Förderantrieb einen Antrieb, mindestens eine Antriebswelle und mindestens eine Förderrolle. In einer besonderen Ausführungsform kann die Lagerachse als Antriebswelle ausgestaltet sein, welche die Förderrolle antreibt. Der Antrieb kann z.B. über einen Servomotor erfolgen.

In einer besonderen Ausführungsform umfasst der Förderantrieb für alle Förderbahnen die in die gleiche Förderrichtung fördern genau einen Antrieb, je eine Antriebswelle und je eine Förderrolle pro Förderbahn. So kann ein einzelner Antrieb alle mit parallel verlaufenden Lagerachsen angeordneten Förderbahnen antreiben.

Durch die erfindungsgemässe Fördereinrichtung kann insbesondere erhöhten Hygienevorschriften in einem Fertigungsprozess für Tampon-Applikatoren Rechnung getragen werden. Insgesamt resultiert durch die Verwendung von Transportriemen ein zu vernachlässigender Abrieb.

Im Sinne der vorliegenden Erfindung kann als Lagerachse die im Wesentlichen senkrecht zur Längsausdehnung eines Transportriemens vorgesehene Lagerachse verstanden werden. Bevorzugt ist die Lagerachse gleichzeitig die Rotationsachse einer Umlaufrolle, über welche der besagte Transportriemen geführt ist.

In einer besonders bevorzugten Ausführungsform ist eine der Lagerachsen eines Transportriemens zugleich die Antriebswelle, über die der Förderantrieb den Transportriemen antreibt.

Die erfindungsgemässe Vorrichtung kann in einer besonderen Ausführungsform mit weiteren Umlaufrollen ausgestaltet sein, um eine Spannung des Förderbandes aufrechtzuerhalten. Besonders bevorzugt sind die zusätzlichen Umlaufrollen für beide Transportriemen einer Förderbahn parallel ausgestaltet.

In einer besonderen Ausführungsform weisen die Transportriemen eine Mehrzahl an Lagerachsen auf, welche jeweils die Rotationsachsen von Umlaufrollen sind, über welche die Transportriemen geführt sind. Besonders bevorzugt sind alle Lagerachsen eines ersten Transportriemens parallel zu den Lagerachsen des zweiten Transportriemens.

In einer besonders bevorzugten Ausführungsform sind die Lagerachsen des ersten Transportriemens konzentrisch mit den Lagerachsen des zweiten Transportriemens.

In einer weiteren besonders bevorzugten Ausführungsform teilen sich die Transportriemen jeweils Umlaufrollen.

Durch die erfindungsgemässe Fördereinrichtung kann in einer besonderen Ausführungsform der Zwischenraum an die Dimensionen eines zu transportierenden Tampon-Applikators angepasst werden. Optimal ist der Zwischenraum so gewählt, dass der Tampon-Applikator auf beiden Transportriemen aufliegt und dabei seitlich geführt wird. Besonders bevorzugt liegt der Tampon-Applikator auf einem ersten Transportriemen in einem Bereich von zwischen 3 und 6 Uhr auf. Entsprechend liegt der Tampon-Applikator auf dem zweiten Transportriemen in einem Bereich von zwischen 6 und 9 Uhr auf. Diese Ausrichtung sei auf die Rotationsachse des Tampon-Applikators zu verstehen. Besonders bevorzugt liegt der Tampon-Applikator in einem Bereich von zwischen 4 und 5 Uhr auf dem ersten Transportriemen, und einem Bereich von zwischen 7 und 8 Uhr auf dem zweiten Transportriemen auf.

In einer besonderen Ausführungsform ist die Förderbahn so ausgestaltet, dass der Zwischenraum zwischen den Transportriemen verstellbar ist. Dazu können z.B. die Transportriemen entlang ihrer Lagerachse aufeinander zu resp. voneinander weg angeordnet und mittels eines Arretierungsmittels fixiert werden. Dies kann insbesondere hilfreich sein, um unterschiedliche Applikatorendimensionen optimal zu akkommodieren, z.B. mit einem Kontaktbereich, wie er oben ausgeführt wurde.

Die erfindungsgemässe Fördereinrichtung umfasst eine der ersten Förderbahn nachgelagerte Orientierungseinheit zur Drehung eines zugeführten Tampon-Applikators von einer ersten Orientierung in eine zweite Orientierung.

In einer besonderen Ausführungsform ist die der der ersten Förderbahn nachgelagerte Orientierungseinheit so ausgestaltet, dass sie eine Förderrichtung eines zugeführten Tampon-Applikators von einer ersten Förderrichtung in eine zweite Förderrichtung überführt, insbesondere zeitgleich mit der Drehung des zugeführten Tampon-Applikators von der ersten Orientierung in die zweite Orientierung.

In vorbenannten Orientierungseinheiten für Tampon-Applikatoren wird stets nur die Orientierung des Applikators auf einem Förderband geändert, welches nach der Drehung in die gleiche Förderrichtung weiterläuft. Durch die gleichzeitige Drehung und Änderung der Förderrichtung mit der erfindungsgemässen Orientierungseinheit kann die gesamte Fördereinrichtung platzsparender aufgestellt werden. Eine Mehrzahl an parallel nebeneinander und/oder vertikal versetzt laufender Förderbahnen kann mit angepassten Fördergeschwindigkeiten auf einem vergleichsweise kleinen Raum angeordnet werden. Dabei kann die Fördergeschwindigkeit an die Länge einer Förderbahn angepasst werden, um der Geometrie einer in einer Drehung innen liegenden, kürzeren Förderbahn Rechnung zu tragen.

Im Sinne der vorliegenden Erfindung ergibt sich die Orientierung eines Tampon-Applikators auf der Förderbahn in Bezug auf die Förderrichtung der Förderbahn. Tampon-Applikatoren verfügen über ein distales Kopfende und ein proximales Ende. Das proximale Ende dient der Befestigung eines Stössels, der im Betrieb für das Ausstossen des Tampons aus einem Tampon-Applikator durch das distale Kopfende verantwortlich ist, indem er in einen hülsenförmigen Hohlraum gestossen wird. Ob das distale Kopfende oder das proximale Ende bzgl. der Förderrichtung vorne ist, spielt für das Konzept der vorliegenden Erfindung eine untergeordnete Rolle. Entscheidend für die Weiterverarbeitung von Tampon-Applikatoren ist jedoch eine einheitliche Orientierung spätestens an der Bestückungsstation. Da in den meisten Fällen die Tampon-Applikatoren als loses Gut zunächst in die Fördereinrichtung sortiert werden, gelangen sie in unterschiedlichen Orientierungen auf die Förderbahn. Mit der erfindungsgemässen Fördereinrichtung, umfassend eine nachgelagerte Orientierungseinheit, kann gewährleistet werden, dass in weiteren nachgelagerten Förderbahnen oder in nachfolgenden Prozessschritten alle Tampon-Applikatoren eine bestimmte Orientierung aufweisen.

In einer bevorzugten Ausführungsform umfasst die nachgelagerte Orientierungseinheit eine Gehäusekammer, in welche die erste Förderbahn dergestalt mündet, dass ein auf ihr transportierter Tampon-Applikator durch die Bewegung der Transportriemen in diese Gehäusekammer befördert wird.

In einer besonderen Ausführungsform umfasst die Orientierungseinheit einen Detektor zur Erkennung der ersten Orientierung und/oder der zweiten Orientierung eines zugeführten Tampon-Applikators. Im Sinne der vorliegenden Erfindung kann ein Detektor insbesondere ausgestaltet sein, um ein distales Kopfende oder ein proximales Ende eines Tampon-Applikators zu erkennen. Dies kann in einer besonderen Ausführungsform durch eine optische Detektion stattfinden, indem eine Kamera die herangeführten Tampon-Applikatoren erfasst und eine computerunterstützte Bildauswertung erfolgt, welche die Orientierung dieses Tampon-Applikators erkennt. Je nach erkannter Orientierung kann z.B. die Orientierungseinheit angeleitet sein eine Drehung in die eine, oder andere Drehrichtung durchzuführen.

In einer alternativen Ausführungsform ist die Orientierungseinheit so ausgestaltet und in der Fördereinrichtung angeordnet, dass sie stets eine Drehung durchführt, jedoch die Drehrichtung so wählt, dass der darauffolgende Förderbetrieb stets für alle zugeführten Tampon-Applikatoren in einer bestimmten Orientierung fortgesetzt wird. Dazu kann die Orientierungseinheit so eingerichtet werden, dass sie eine Drehung um einen bestimmten Winkel ausführt, je nachdem, was für eine Orientierung der zugeführte Tampon-Applikator aufweist.

Mit einem optischen Detektor kann auf platzsparende Weise sicher und zuverlässig eine Orientierung eines zugeführten Tampon-Applikators erkannt werden. Alternativ sind auch Detektoren, welche haptisch, oder piezoelektrisch, oder elektromagnetisch eine Orientierung eines Tampon-Applikators erfassen, für die Ausführung dieser besonderen Ausführungsform denkbar.

In einer besonderen Ausführungsform ist der Detektor derart ausgebildet, dass er eine einzelne Förderbahn überwacht und auf dieser die Orientierung der zugeführten Tampon-Applikatoren erkennt. Alternativ oder ergänzend kann ein Detektor vorgesehen sein, der eine Reihe von parallel nebeneinander oder übereinander angeordneter Förderbahnen überwacht und entweder einzelne Bildabschnitte computergestützt analysiert und/oder ein Gesamtbild analysiert und entsprechend für alle durch diesen Detektor gesteuerten Orientierungseinheiten die nachfolgende Drehbewegung über einen Steuercomputer auslöst.

In einer besonderen Ausführungsform ist der Detektor in der Gehäusekammer der Orientierungseinheit untergebracht.

In einer besonderen Ausführungsform ist der Detektor ein optischer Detektor, der mittels eines Lichtstrahls, insbesondere eines Lasers, die Förderbahn überwacht und so die Orientierung eines zugeführten Tampon-Applikators erkennt.

In einer besonderen Ausführungsform ist die Orientierungseinheit zwischen zwei in Förderrichtung hintereinander angeordneter Förderbahnen angeordnet. Dadurch kann die Orientierungseinheit einen in einer ersten Orientierung von der ersten Förderbahn geförderten Tampon-Applikator in eine zweite Orientierung zur Weiterförderung auf der zweiten Förderbahn drehen.

In einer weiteren besonderen Ausführungsform dieses Konzepts sind die erste Förderbahn und die zweite Förderbahn so zueinander angeordnet, dass sie unterschiedliche Förderrichtungen aufweisen. Die Orientierungseinheit vollführt somit nicht nur einen Schritt zur richtigen Orientierung eines Tampon-Applikators, sondern ermöglicht auch das Überführen der Tampon-Applikatoren aus einer Förderrichtung in eine andere Förderrichtung. Diese Anordnung kann besonders vorteilhaft sein, wenn die Raumgeometrie für die Zuführung der Applikatoren optimal auszunutzen ist.

In einer besonderen Ausführungsform ist die erste Förderbahn auf einer ersten Förderebene angeordnet und mindestens eine weitere Förderbahn auf mindestens einer zweiten Förderebene angeordnet. Ein besonderer Vorteil der vorliegenden Erfindung ist es, dass mit den platzsparenden Förderbahnen der Raum für die Zufuhr der Tampon-Applikatoren optimal ausgenutzt werden kann. Dies kann z.B. dadurch erfolgen, dass mehrere parallel zueinander verlaufende Förderbahnen vertikal und/oder diagonal zueinander angeordnet werden können. So kann eine Förderung von Tampon-Applikatoren sozusagen über mehrere Stockwerke erfolgen, was eine insgesamt höhere Applikatorzufuhr für die nachfolgende Bestückungsvorrichtung ermöglichen kann.

In einer besonderen Ausführungsform umfasst die Orientierungseinheit ein Drehelement zur Aufnahme eines Tampon-Applikators. In seiner einfachsten Ausführungsform kann ein solches Drehelement als Drehscheibe ausgestaltet sein. Bevorzugt ist das Drehelement aber als Drehkreuz ausgestaltet und derart in der Orientierungseinheit gelagert, dass es zwischen mindestens zwei Ausrichtungen drehbar ist. Bevorzugt ist das Drehkreuz stets so zwischen zwei Förderbahnen ausgerichtet, dass stets eine Drehkreuzöffnung zur Längsrichtung der Förderbahn mündet, sodass ein auf diesem geförderten Tampon-Applikator in das Drehkreuz eingeführt werden kann. Im Betrieb würde das Drehkreuz anlässlich eines Detektors die Orientierung des zugeführten Tampon-Applikators erkennen und je nachdem eine Drehbewegung in eine bestimmte Richtung und einem bestimmten Drehwinkel vornehmen. Durch die Ausgestaltung eines Drehkreuzes in der Orientierungseinheit kann diese optimal ausgelastet werden, und dabei muss nur ein vergleichsweise geringerer Winkel überbrückt werden.

Erfindungsgemäß umfasst die Orientierungseinheit eine Grundplatte. Die Grundplatte weist eine Ausnehmung auf, durch welche ein sich in einer bestimmten zweiten Orientierung befindlicher Tampon-Applikator entlang seiner Längsausdehnung hindurchbewegen kann. So kann z.B. ein gedrehter Tampon-Applikator, sobald er sich in der entsprechenden Ausrichtung befindet, durch die Ausnehmung hindurchfallen und direkt auf eine zweite Förderbahn fallen, auf der er entlang einer zweiten Förderrichtung weiterbewegt wird.

Die Grundplatte kann in der Orientierungseinheit ortsfest angeordnet sein, sodass ein Drehelement über ihr drehbar angeordnet sein kann, und somit Tampon-Applikatoren von einer ersten Ausrichtung, bei welcher sie nicht durch die Ausnehmung fallen können, in eine zweite Ausrichtung gedreht werden können, durch die die Tampon-Applikatoren durch die Ausnehmung fallen können. Somit erübrigt sich z.B. ein spezifischer Ejektor oder eine andere Vorrichtung, welche die Tampon-Applikatoren aus der Orientierungseinheit wieder in die Förderbahn führt,

Die Ausnehmung kann so ausgestaltet sein, dass sie im Wesentlichen der Form eines Tampon-Applikators entspricht. Insbesondere ist die Ausnehmung als länglicher Schlitz ausgestaltet, durch welcher ein Tampon-Applikator entlang seiner breiten Achse hindurchpasst. Wird die Orientierungseinheit dazu verwendet, zusätzlich eine Drehung um 90-Grad in der Förderrichtung zu bewerkstelligen, so ist die Ausnehmung auf der Grundplatte in einem 90-Grad-Winkel zur ersten Förderbahn ausgerichtet. Im Betrieb würde sich ein Tampon-Applikator, durch die erste Förderbahn in die Orientierungseinheit befördert, in einem Drehkreuz wiederfinden. Dieses Drehkreuz dreht den Tampon-Applikator um einen 90-Grad-Winkel, abhängig von der erkannten Orientierung, und nachdem die Ausrichtung des Tampon-Applikators um den entsprechenden Winkel verändert wurde, würde dieser durch die Ausnehmung auf eine zweite Förderbahn fallen, welche unter der Orientierungseinheit angeordnet ist.

In einer besonderen Ausführungsform umfasst die erfindungsgemässe Fördereinrichtung eine Mehrzahl an Förderbahnen. Sie kann eine Mehrzahl an parallel angeordneten Förderbahnen, wie vorgängig beschrieben, aufweisen und/oder ergänzend eine Mehrzahl nachfolgender Förderbahnen. Die Förderbahnen können horizontal ausgerichtet sein, d.h. dergestalt, dass ein geförderter Tampon-Applikator entlang der Beförderung auf einer Förderbahn keinen Höhenunterschied zurücklegt. Sie können aber auch leicht bis mittel geneigt sein, sodass der geförderte Tampon-Applikator insgesamt eine Bewegung nach unten oder nach oben vollführt, während er entlang einer Förderbahn gefördert wird. Hilfreich ist es dabei, die Reibungskoeffizienten der Transportriemen zu berücksichtigen. Bevorzugt wird die Neigung so gewählt, dass der geförderte Tampon-Applikator durch Haftreibung ortsfest bezüglich des Transportriemens verbleibt, während er gefördert wird.

Durch die erfindungsgemässe Fördereinrichtung und insbesondere durch die parallel angeordneten Lagerachsen kann besonders platzsparend eine Mehrzahl an parallel verlaufenden Förderbahnen bewerkstelligt werden. Die Förderbahnen können anschliessend einen Winkel zu nachfolgenden Förderbahnen einschliessen. Diese nachfolgenden Förderbahnen können unterschiedlich lang sein von den ersten parallel angeordneten Förderbahnen. Alle parallel angeordneten Förderbahnen können so ausgestaltet sein, dass sie parallele Lagerachsen aufweisen. Besonders bevorzugt werden sie durch eine einzige Welle angetrieben.

In einer besonderen Ausführungsform schliessen zwei hintereinander angeordnete Förderbahnen einen Winkel zueinander ein. Besonders bevorzugt beträgt der Winkel zwischen 30 und 120 Grad, besonders bevorzugt im Wesentlichen 90 Grad.

Im Sinne der vorliegenden Erfindung sei im Wesentlichen ein 90-Grad-Winkel dann erreicht, wenn eine Abweichung zu 90 Grad nicht mehr als +/-5 Grad beträgt. Es ist selbstredend, dass eine allfällige Orientierungseinheit, die die entsprechende Drehung zwischen zwei in einem Winkel zueinander angeordneten Förderbahnen so ausgestaltet sein kann, dass sie eine entsprechende Winkelabweichung auszugleichen vermag. Bevorzugt aber wird ein Winkel von genau 90 Grad eingeschlossen, da dadurch lediglich die Richtung einer Drehbewegung der Orientierungseinheit vorgegeben wird und der gedrehte Winkel fest ist. Wie eingängig geschildert, kann sich die entsprechende Drehrichtung auf der Basis der Orientierung eines zugeführten Tampon-Applikators ergeben.

In einer besonderen Ausführungsform sind die Transportriemen im Querschnitt senkrecht zur Längsachse radialsymmetrisch, besonders bevorzugt rund ausgebildet. Ein Beispiel für einen solchen Riemen ist z.B. ein Rundriemen. Grundsätzlich sind aber auch viereckige, fünfeckige, sechs-, sieben- etc. -eckige Riemen für die Ausführung der vorliegenden Erfindung denkbar.

Durch Rundriemen ist stets ein optimales Aufliegen eines Tampon-Applikators im Zwischenraum zwischen den Transportriemen gewährleistet. Zudem kann die Führung der Transportriemen effizienter ausgestaltet werden, und die Belastung durch die Spannung auf dem Riemenquerschnitt ist ausgeglichener, was zu einem geringeren Verschleiss führen kann.

In einer besonderen Ausführungsform sind erfindungsgemässe Transportriemen Rundriemen, welche über Rollen ablaufen. Solche Riemen sind sehr spurgenau und leicht zu warten. Der Förderantrieb kann an einer Stirnseite der Förderbahn als Kopfantrieb ausgestaltet sein. Auch ein Mittenantrieb ist allerdings denkbar. Die Transportriemen können über Rollen abgetragen sein oder auch über Gleitleisten, welche eine besonders geringe Reibung aufweisen. Die Rollen können für die Aufnahme der Transportriemen mit entsprechenden Führungsnuten versehen sein, welche bei einer korrekten Spannung der Transportriemen auch für eine ausreichende Seitenführung der Transportriemen ausreichend sind.

Es können weitere Spannrollen vorgesehen sein, welche eine gewisse Spannung mittels einer Rückstellkraft auf eine Förderbahn ausüben, um die Seitenführung auch für die transportierten Tampon-Applikatoren stets zu gewährleisten.

Der Förderantrieb der Fördereinrichtung kann so ausgestaltet sein, dass er ein kontinuierliches Be- und Entschleunigen des Transportriemens ermöglicht.

In einer besonderen Ausführungsform umfasst die erfindungsgemässe Förderrichtung mindestens eine Vereinzelungsrolle, welche so an der Förderbahn angeordnet ist, dass sie in einen Zwischenraum zwischen die zwei voneinander beabstandeten Transportriemen eingreift. Diese Vereinzelungsrolle kann z.B. so ausgestaltet sein, dass sie mit einer Drehgeschwindigkeit rotierbar ist, welche höher ist als die Fördergeschwindigkeit der betreffenden Förderbahn. Dadurch können z.B. im Betrieb zwei ineinander verhakte Tampon-Applikatoren voneinander getrennt werden. Die Rolle greift den ersten Tampon und beschleunigt ihn vom zweiten Tampon für eine kurze Zeit schneller als die Förderrichtung der Förderbahn weg.

Alternativ und/oder ergänzend kommt die erfindungsgemässe Fördereinrichtung gänzlich ohne eine separate Vereinzelungsrolle aus. So können z.B. zwei hintereinander angeordnete Förderbahnen mit unterschiedlicher Geschwindigkeit betrieben werden. Gelangt ein erster Tampon-Applikator von der ersten Förderbahn, welche mit einer ersten Fördergeschwindigkeit bewegt wird, auf die zweite Förderbahn, welche mit einer zweiten Geschwindigkeit bewegt wird, welche z.B. höher ist als die Geschwindigkeit der ersten Förderbahn, so wird er von einem allfällig mit dem ersten Tampon-Applikator verhakten zweiten Tampon-Applikator wegbeschleunigt. Dadurch kann eine Vereinzelung stattfinden, ohne dass zusätzliche Vereinzelungselemente vorgesehen sein müssen.

In einer besonderen Ausführungsform ist mindestens eine Vereinzelungsrolle der Orientierungseinheit in Förderrichtung vorgelagert, so dass die Tampon-Applikatoren vereinzelt zur Orientierungseinheit gefördert werden.

In einer besonderen Ausführungsform der erfindungsgemässen Fördereinrichtung sind mehrere hintereinander angeordnete Förderbahnen mit unterschiedlichen Fördergeschwindigkeiten vorgesehen. So kann z.B. eine Unregelmässigkeit in der Zuführung von Tampon-Applikatoren aus dem losen Gut ausgeglichen werden, indem verschiedene Fördergeschwindigkeiten die Tampon-Applikatoren insgesamt entlang der gesamten Förderbahn vereinzeln und eine besser getaktete Zufuhr möglich wird.

In einer besonderen Ausführungsform umfasst die erfindungsgemässe Fördereinrichtung mindestens einen Stopper. Dieser ist so an der Förderbahn angeordnet, dass er in einen Zwischenraum zwischen zwei voneinander beabstandete Transportriemen eingreift. Hier zeigt sich ein weiterer Vorteil der erfindungsgemässen Vorrichtung mit den beabstandeten Transportriemen. Ein solcher Stopper kann z.B. in einem Pufferbereich der Fördereinrichtung zum Tragen kommen, wenn mehrere Tampon-Applikatoren für einen nächsten Bearbeitungsschritt, z.B. einem Bestückungsschritt, bereitgestellt werden müssen. So können z.B. entsprechende Frequenzen an Tampon-Applikatoren-Zufuhren ermöglicht werden, indem eine Reihe von parallel angeordneten Förderbahnen mit entsprechenden Stoppern ausgestattet sein können, welche eine bestimmte Frequenz sicherstellen.

In einer besonderen Ausführungsform umfasst eine erfindungsgemässe Förderbahn, welche als Puffer dienen soll, eine Mehrzahl an Stoppern. Weiter können z.B. Stoppdetektoren vorgesehen sein, welche erkennen, ob ein Tampon-Applikator von einer nachfolgenden Bearbeitungsstation abgegriffen und weiterverarbeitet worden ist. Ist ein bestimmter Tampon-Applikator an einem Ende einer erfindungsgemässen Fördereinrichtung z.B. angelangt, so kann ein Detektor vorgesehen sein, welcher diesen Tampon-Applikator als parkiert detektiert und ein Signal an einen vorgelagerten Stopper weitergibt, welcher einen zugeführten Tampon-Applikator stoppt. Dieser Pufferbereich kann mit einer Mehrzahl an solchen Stoppern ausgestattet sein. Bevorzugt weist eine solche als Puffer ausgestaltete Förderbahn mindestens einen Stopper und mindestens einen Detektor auf, bevorzugt zwischen einem und 15 Stoppern. Selbstverständlich können mehrere parallel angeordnete Förderbahnen als Pufferzone ausgestaltet sein und mit entsprechenden Stoppern ausgestattet sein.

In einer besonderen Ausführungsform ist der Stopper als Hebel ausgestaltet, welcher sich in den Zwischenraum zwischen zwei Transportriemen bewegt, und somit einen Tampon-Applikator am Weiterverlauf in Förderrichtung physisch hindert.

In einer besonderen Ausführungsform kann der Transportriemen einer zur Pufferung ausgerichteten Förderbahn mit reibungsmindernden Beschichtungen versehen sein, sodass ein gestoppter Tampon-Applikator durch die Reibung des weiterbewegenden Transportriemens nicht in Mitleidenschaft gezogen wird. Alternativ oder ergänzend kann der Transportriemen einer zur Pufferung ausgerichteten Förderbahn aus einem reibungsarmen Kunststoff bestehen.

In einer besonderen Ausführungsform umfasst die erfindungsgemässe Fördereinrichtung mindestens einen Ejektor zur Beförderung eines Tampon-Applikators von einem Ende der Förderbahn in eine anschliessende Bearbeitungseinheit, insbesondere eine nachgelagerte Orientierungseinheit. Der Ejektor ist dann so an der Förderbahn angeordnet, dass er in einen Zwischenraum zwischen die zwei voneinander beabstandeten Transportriemen eingreift.

In einer besonderen Ausführungsform treibt der Förderantrieb über eine Welle, welche parallel zu den Längsachsen der Transportriemen angeordnet ist, diese an.

Ein weiterer Aspekt der vorliegenden Erfindung betrifft ein Verfahren zum Fördern von Tampon-Applikatoren. Insbesondere wird dieses Verfahren mit einer Fördereinrichtung, wie eingängig beschrieben, durchgeführt. Das erfindungsgemässe Verfahren umfasst eine Reihe von Schritten. Zunächst wird mindestens ein Tampon-Applikator, insbesondere ein loses Gut an Tampon-Applikatoren, bereitgestellt. Die Tampon-Applikatoren werden auf eine erste Förderbahn zugeführt. Diese weist zwei voneinander beabstandet angeordnete Transportriemen auf, sodass ein zu fördernder Tampon-Applikator in einem Zwischenraum zwischen den Transportriemen auf beiden Transportriemen aufliegt. Anschliessend wird der Tampon-Applikator durch die Förderbahn in eine erste Förderrichtung gefördert.

Das Zuführen der Tampon-Applikatoren kann z.B. über einen Schütteltrichter erfolgen, welcher einen entsprechenden Durchlauf hat, um einzelne Tampon-Applikatoren mittels einer Bahn auf die Förderbahn aufzulegen.

In einer besonderen Ausführungsform wird der Tampon-Applikator von einer ersten Förderbahn mit einer ersten Fördergeschwindigkeit in Förderrichtung gefördert.

In einer weiteren besonderen Ausführungsform wird der Tampon-Applikator von der ersten Förderbahn auf eine zweite Förderbahn überführt, wobei die zweite Förderbahn mit einer zweiten Fördergeschwindigkeit den Tampon-Applikator in Förderrichtung bewegt. Diese zweite Fördergeschwindigkeit kann von der ersten Fördergeschwindigkeit verschieden sein, bevorzugt ist sie höher als die erste Fördergeschwindigkeit.

In einer besonderen Ausführungsform wird ein Tampon-Applikator zwischen zwei Förderbahnen von einer Orientierungseinheit von einer ersten Orientierung in eine zweite Orientierung überführt. Diesem Schritt kann ein vorgängiges Detektieren einer Orientierung über einen Detektor vorangestellt sein.

In einer besonderen Ausführungsform ist die Drehung des Tampon-Applikators von dessen detektierter Orientierung abhängig. Die Drehung kann insbesondere in zwei Richtungen erfolgen. Ist der Tampon-Applikator bei der Detektion bereits korrekt ausgerichtet, d.h. eine erste Orientierung, die für die Weiterbearbeitung geeignet ist, wird detektiert, so findet eine Drehung um 90 Grad von einer ersten Förderbahn auf eine zweite Förderbahn statt. Wird festgestellt, dass der Tampon-Applikator in der entgegengesetzten Orientierung in die Orientierungseinheit gelangt, so wird eine zur ersten Drehbewegung gegensätzliche Drehbewegung ebenfalls um 90 Grad durchgeführt. Dadurch wird ebenfalls ein 90-Grad-Winkel gedreht, aber das ursprünglich in Förderrichtung vorne befindliche Ende befindet sich nun in Förderrichtung hinten.

In einer besonderen Ausführungsform wird eine Reihe an Tampon-Applikatoren auf einer Serie an parallel angeordneten Förderbahnen in Richtung einer weiteren Bearbeitungsstation, insbesondere einer Bestückungsstation, bewegt. Die der Bestückungsstation direkt vorgelagerten Förderbahnen sind als Pufferbahnen ausgestaltet und weisen eine Reihe von Stoppern auf, die Tampon-Applikatoren aufhalten und an einem Fortfahren entlang der Förderbahn hindern, indem sie sich in den Zwischenraum zwischen den Transportriemen erstrecken. Dieser Schritt kann durch Stoppdetektoren gesteuert sein, welche feststellen, ob eine nachfolgende Bearbeitungsstation frei ist, und/oder ob eine nachgeschaltete Pufferzone von einem Tampon-Applikator besetzt ist oder nicht.

Ein weiterer Aspekt der vorliegenden Erfindung betrifft ein Verfahren zum Betreiben einer Fördereinrichtung wie oben beschrieben.

Für einen Fachmann ergibt es sich aus den besonderen Ausführungsformen von selbst, dass diese in einer erfindungsgemässen Ausgestaltung in einer beliebigen Kombination auftreten können, sofern sie sich nicht gegenseitig ausschliessen und der Schutzumfang der nachfolgenden unabhängigen Ansprüche nicht verlassen wird.

Im Folgenden wird nun die vorliegende Erfindung anhand konkreter Ausführungsbeispiele und Figuren näher erläutert, ohne jedoch auf diese eingeschränkt zu sein.

### Figurenbeschrieb

Die Figuren illustrieren die vorliegende Erfindung auf schematische Art und Weise, wobei der Einfachheit halber gleichen Teile mit dem gleichen Bezugszeichen versehen sind.

Es zeigen schematisch:
- Fig. 1: einen Tampon-Applikator, wie er mit der erfindungsgemässen Fördereinrichtung gefördert werden kann;
- Fig. 2: ein Ausschnitt aus einer erfindungsgemässen Fördereinrichtung;
- Fig. 3: ein weiterer Ausschnitt aus einer erfindungsgemässen Fördereinrichtung;
- Fig. 4: eine Orientierungseinheit;
- Fig. 5: ein weiterer Ausschnitt einer erfindungsgemässen Fördereinrichtung;
- Fig. 6: ein Querschnitt durch ein Förderband mit aufliegendem Tampon-Applikator;
- Fig. 7: ein Stopper für eine erfindungsgemässe Fördereinrichtung, und
- Fig. 8: die Funktionsweise einer Orientierungseinheit.

### Ausführung der Erfindung

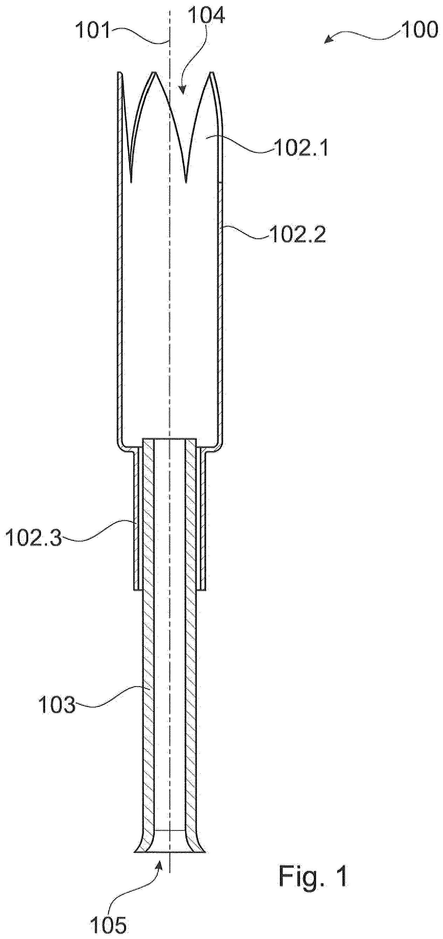

Die **Fig. 1** zeigt exemplarisch einen Tampon-Applikator 100, wie er mit der erfindungsgemässen Vorrichtung gefördert werden kann. Der Tampon-Applikator 100 ist im Wesentlichen zweiteilig aufgebaut. Er setzt sich aus einem Tampon-Körper und einem Stössei 103 zusammen. Der Stössel 103 ist so im Tampon-Applikator 100 angeordnet, dass er entlang der Längsachse 101 verschiebbar ist. Der Tampon-Applikator 100 weist ein distales Kopfende 104 mit einer Kopföffnung auf. Demgegenüber liegt die proximale Fadenöffnung 105 des als Röhrchens ausgestalteten Stössels 103.

Der Tampon-Körper gliedert sich in drei Bereiche. Am distalen Kopfende 104 befinden sich als Blütenblatt 102.1 ausgestaltete eingeschnittene Flügel. Sie verlaufen in den Hülsenkörper 102.2, der einen Tampon-Hohlraum definiert. Direkt an den Hülsenkörper 102.2 schliesst sich ein Griffbereich 102.3 an, der im vorliegenden Beispiel auch zur Führung des Stössels 103 dient. Der Hülsenkörper 102 dient der Aufnahme eines Tampons, wobei bei den gängigen Bestückungsverfahren der Tampon über das distale Kopfende 104 in den Tampon-Applikator geladen wird. Die proximale Fadenöffnung 105 dient dazu, den Rückholfaden nach aussen zu führen. Im Betrieb wird der Stössel 103 in den Hohlraum des Hülsenkörpers 100.2 gestossen, wobei der Tampon durch die distale Kopföffnung 104 ausgestossen wird. Der Rückholfaden kann dabei zurückgehalten werden.

Für die vorliegende Erfindung betrifft ein Aspekt der Fördereinrichtung die Orientierung des Tampon-Applikators am Ende der Fördereinrichtung. Ob das distale Kopfende 104, oder das proximale Ende 105 dabei in Förderrichtung vorne ist, ist von untergeordneter Bedeutung und wird durch die Art und Weise, wie die nachfolgende Bestückungseinheit operiert, bestimmt. Vielmehr entscheidend ist, dass alle Tampon-Applikatoren 100 am Ende der Förderstrecke in einer bestimmten Orientierung antreffen. Durch die Geometrie der Tampon-Applikatoren kann es vorkommen, dass einzelne Blütenblätter mit nachfolgenden oder vorgängigen Tampon-Applikatoren, also deren proximale Kopföffnungen oder distale Enden verhaken. Für die meisten Bestückungsstationen ist es daher von Vorteil, wenn die Tampon-Applikatoren am Ende der Fördereinrichtung weitestgehend vereinzelt in einer kontrollierten Zufuhr bereitgestellt werden.

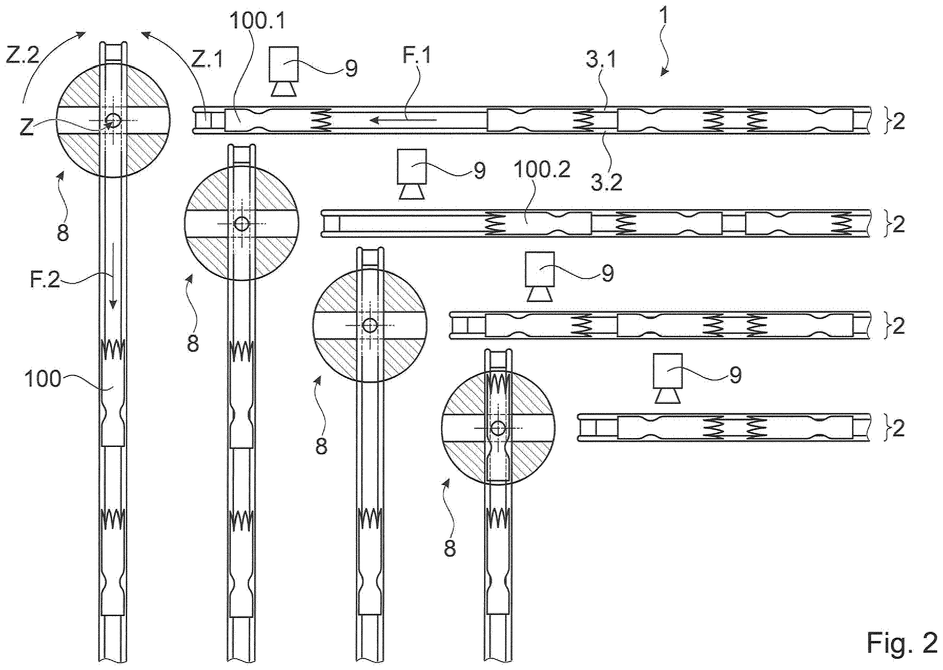

Um dies zu ermöglichen, ist eine als Beispiel gezeigte Fördereinrichtung 1 in der Fig. 2 schematisch dargestellt. Die gezeigte Fördereinrichtung 1 weist insgesamt vier parallel verlaufende Förderbahnen 2 in einer ersten Förderrichtung F.1 auf. Nach einer Drehung um im Wesentlichen 90 Grad laufen die Tampon-Applikatoren 100 in einer zweiten Förderrichtung F.2 weiter. Auf den Förderbahnen 2 liegen die Tampon-Applikatoren 100, 100.1, 100.2 zwischen zwei Transportriemen 3.1, 3.2 auf diesen auf. Die Transportriemen 3.1, 3.2 sind in Durchmesser und Abstand so gewählt, dass sie einen Tampon-Applikator 100.1, 100.2, 100 so aufliegen lassen, dass er auf beiden Transportriemen 3.1, 3.2 mit mindestens einer Kontaktfläche aufliegt.

Das gezeigte Beispiel einer Fördereinrichtung 1 operiert mit Tampon-Applikatoren 100, 100.1, 100.2, die einen Aussendurchmesser von 15 mm aufweisen und eine Gesamtlänge von 75 mm aufweisen. Die Transportriemen 3.1, 3.2 weisen einen Durchmesser von 7,5 mm auf und bestehen aus einem PU-Kunststoff.

Die Tampon-Applikatoren können der Fördereinrichtung als loses Gut zugeführt werden, wobei eine Vereinzelungsstation oder ein Schütteltrichter vorgesehen sein kann, um die Tampon-Applikatoren auf die Förderbahnen zu bringen (nicht gezeigt). Im vorliegenden Beispiel sind die Tampon-Applikatoren auf der vorgelagerten Förderbahn 2 bereits vereinzelt worden (in der Fig. 1 nicht gezeigt).

Bei ihrer Förderung in die erste Förderrichtung F.1 passieren die vereinzelten Tampon-Applikatoren 100, 100.1, 100.2 auf allen Förderbahnen einen Detektor 9, der optisch die Orientierung eines Tampon-Applikators 100, 100.1, 100.2 erkennt. Im vorliegenden Beispiel gelangt ein erster Tampon-Applikator 100.1 mit einer ersten Orientierung A zum Detektor und ein exemplarischer zweiter Tampon-Applikator 100.2 mit einer zweiten Orientierung B an einen Detektor. Im vorliegenden Beispiel sind die beiden Tampon-Applikatoren 100.1, 100.2 mit gegensätzlicher Orientierung auf zwei parallelen Förderbahnen gezeigt. Selbstverständlich können aber auf allen ersten Förderbahnen die Tampon-Applikatoren in beiden möglichen Orientierungen zugeführt werden, wie aus der Fig.2 ersichtlich.

Entspricht nun die erste Orientierung A der gewünschten Orientierung auf der zweiten Förderrichtung F.2, so wird vom Detektor 9 ein entsprechendes Signal an eine nachfolgende Orientierungseinheit 8 gesandt, dass der betreffende Tampon-Applikator 100.1 in eine erste Drehrichtung Z.1 zu drehen sei.

Gelangt ein Tampon-Applikator 100.2 mit der zweiten Orientierung B zu einem Detektor 9, so weist dieser die nachfolgende Orientierungseinheit 8 an, eine Drehung in eine zweite Drehrichtung Z.2 vorzunehmen. Da die Orientierungseinheiten 8 im vorliegenden Beispiel einen Drehwinkel der Förderrichtung F.1 um 90 Grad auf die Förderrichtung F.2 vornehmen, reicht in beiden Fällen eine Drehung um 90 Grad aus, um eine Weiterförderung in der gewünschten Orientierung A zu ermöglichen. Im vorliegenden Beispiel wird gleichzeitig mit der Orientierung der Tampon-Applikatoren die Förderrichtung gewechselt, von der ersten Förderrichtung F.1 zur zweiten Förderrichtung F.2, welche rechtwinklig zur ersten verläuft.

Zum Zwecke des Orientierungswechsels und des gleichzeitigen Wechsels der Förderrichtung ist im vorliegenden Beispiel die Orientierungseinheit 8 mit einem Drehkreuz ausgestattet, in welches ein Tampon-Applikator 100, 100.1, 100.2 eingeführt wird. Eine Drehung des Drehkreuzes um 90 Grad reicht aus, und die Orientierungseinheit 8 ist bereit, um den nächsten Tampon-Applikator 100, 100.1, 100.2 aufzunehmen. Dies ermöglicht ein insgesamt sparsames Verfahren bei grösstmöglichem Durchsatzvolumen.

Das Drehkreuz der Orientierungseinheit 8 ist so ausgelegt, dass es um eine zentrale Rotationsachse Z in zwei Richtungen Z.1, Z.2 drehbar ist.

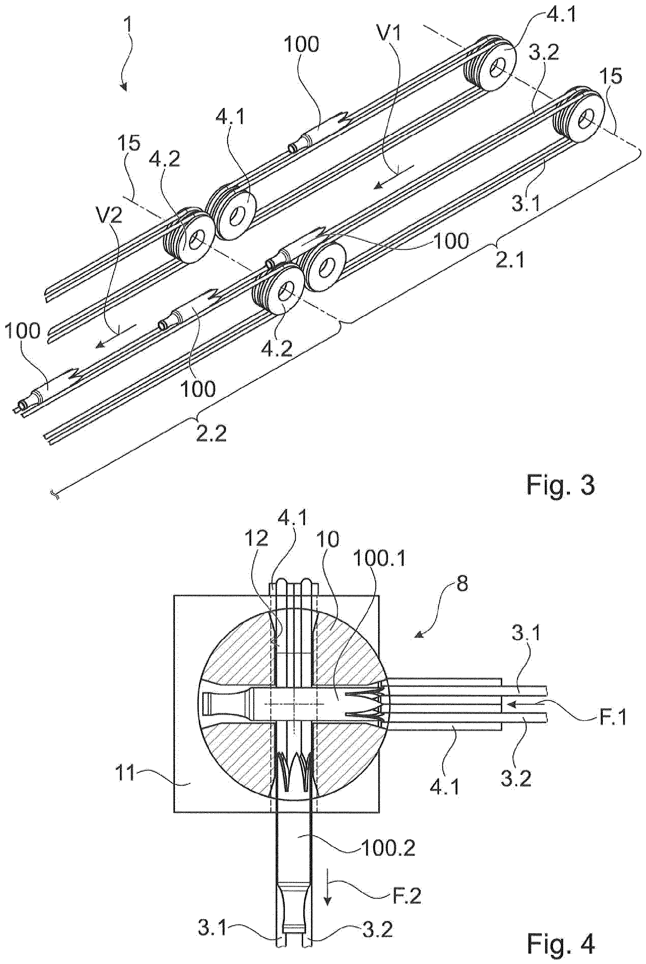

Eine alternative oder ergänzende Ausführungsform ist in der Fig. 3 dargestellt. Diese Anordnung als Fördereinrichtung kann z.B. der Fördereinrichtung der Fig. 2 vorgeschaltet sein oder entsprechend als Fortsetzung in der zweiten Förderrichtung F.2 an die Fördereinrichtung der Fig. 2 anschliessen. Im vorliegenden Beispiel sind insgesamt vier Förderbahnen gezeigt. Dabei folgen auf zwei erste Förderbahnen, welche parallel zueinander angeordnet sind, zwei nachfolgende Förderbahnen. Diese Förderbahnen unterscheiden sich voneinander, indem sie über separate Rollen 4.1, 4.2 laufen. Im vorliegenden Beispiel sind die ersten, parallel angeordneten Förderbahnen über einen ersten Förderantrieb 4.1 über eine Kopfrolle angetrieben. Im vorliegenden Beispiel ist es von untergeordneter Bedeutung, ob die Kopfrolle zu Beginn der Förderstrecke oder am Ende der Förderstrecke angetrieben wird. Des Beispiels willen sei in der vorliegenden Ausführungsform die Kopfrolle zu Beginn der ersten Förderbahn angetrieben. Entsprechend kann im vorliegenden Beispiel auch die Kopfrolle zu Beginn der zweiten Förderabschnitte und Förderbahnen angetrieben sein.

Ein Vorteil dieser Fördereinrichtung 1 ist, dass sie zusätzlich zur Vereinzelung der Tampon-Applikatoren dienen kann. Dabei werden im ersten Förderabschnitt 2.1 die Förderbahnen mit einer ersten Fördergeschwindigkeit V1 angetrieben, und in einem zweiten Förderabschnitt 2.2 die Förderbahnen mit einer zweiten Fördergeschwindigkeit V2 angetrieben. Zur optimalen Vereinzelung ist die Fördergeschwindigkeit V2 grösser als die Fördergeschwindigkeit V1. Im Zwischenraum zwischen den beiden Förderbahnen wird nun ein allfällig mit einem vorgängigen Tampon-Applikator oder einem nachfolgenden Tampon-Applikator in Kontakt stehender Applikator durch die Beschleunigung von diesem physisch gelöst. Im vorliegenden Beispiel beträgt die erste Fördergeschwindigkeit V1 0.2 m/s und die zweite Fördergeschwindigkeit V2 0.3 m/s.

Alternativ kann eine Vereinzelung über eine entsprechende Vereinzelungsrolle stattfinden, welche in einer bestimmten Rotationsgeschwindigkeit zwischen den beiden Transportriemen 3.1, 3.2 eingreift und so einen Tampon-Applikator wegbeschleunigt (in der Fig. 3 nicht gezeigt).

Durch die platzsparende Anordnung mit transportriemenbasierten, insbesondere rundriemenbasierten Förderbahnen können zahlreiche vorteilhafte Geometrien realisiert werden. Die Förderbahnen sind, wie in der Fig. 3 illustriert, gut modular zusammensetzbar. Je nachdem, ob sich die Fördergeschwindigkeiten V1, V2 unterscheiden müssen, können für Förderbahnen, welche parallel angeordnet sind und die gleiche Fördergeschwindigkeit aufweisen, entsprechende Antriebswellen geteilt werden, was der platzsparenden Bauweise ebenfalls zugutekommt.

In der Fig. 3 sind die Achsen 15 der Förderbahnen parallel. Ein Förderantrieb kann über einen Antrieb mittels Bandriemen direkt auf Antriebswellen in den Achsen 15 wirken und so die Kopfrolle 4.2 antreiben.

In der **Fig. 4** wird schematisch eine Orientierungseinheit 8 dargestellt. Die Orientierungseinheit 8 ist zur Darstellung der Funktionsweise gerade mit einem Tampon-Applikator 100.1 in einer ersten Orientierung A bestückt worden. Dazu ist über die Transportriemen 3.1, 3.2 einer Förderbahn mit einer ersten Förderrichtung F.1 der Tampon-Applikator über eine erste Antriebsrolle 4.1 in eine Aufnahmeöffnung eines Drehelements 10 eingeschoben worden. Das Drehelement 10 ist als Drehkreuz ausgestaltet. Die zweite Förderbahn befindet sich unterhalb der Orientierungseinheit 8 und wird über eine zweite Antriebsrolle 4.2 angetrieben, und verfügt ebenfalls über zwei Transportriemen 3.1, 3.2, wobei exemplarisch ein zweiter Tampon-Applikator 100.2 bereits auf dieser in einer zweiten Förderrichtung F.2 weitergefördert wird. Dies wurde dadurch ermöglicht, dass das Drehelement 10 eine 90-Grad-Drehung vollführt hat und nach Abschluss dieser 90-Grad-Drehung der Tampon-Applikator 100.2 mit seiner Längsachse parallel zur zweiten Förderrichtung F.2 ausgerichtet ist.

Eine auf einer Grundplatte vorgesehene Aufnahmeöffnung sorgt dafür, dass dieser zweite Tampon-Applikator 100.2 hindurchfallen kann und direkt auf die Förderbahn der zweiten Förderrichtung F.2 gefallen ist, und in diese Förderrichtung weggefördert wurde.

Wahlweise kann ein Detektor innerhalb dieses Arrangements verbaut werden. So kann z.B. am Eingang der Aufnahmeöffnung des Drehelements 10 ein optischer Sensor vorgesehen sein, welcher die Orientierung des eingeführten Tampon-Applikators feststellt.

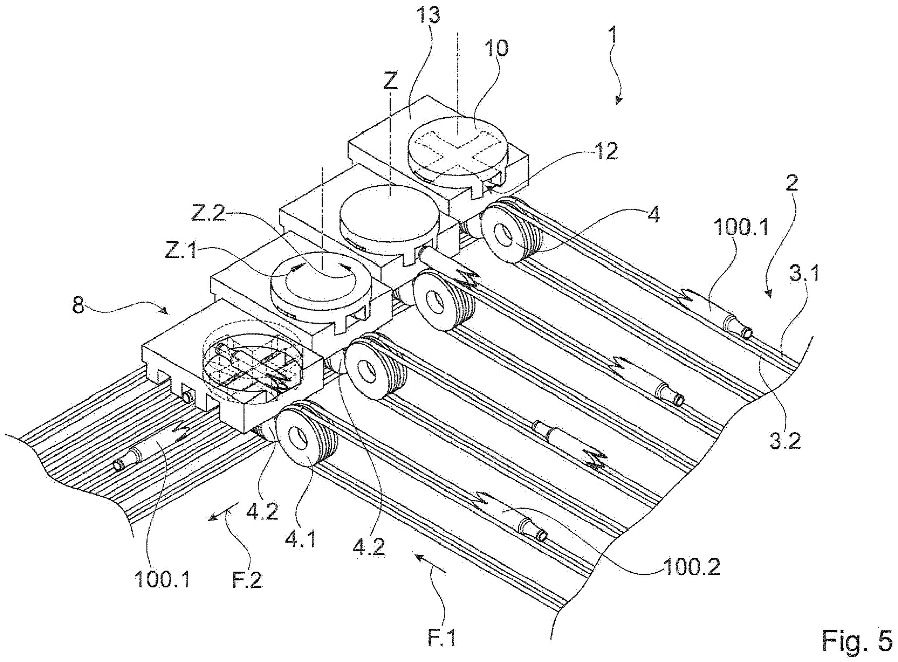

In einer komplexen Ausführungsform mit einer Mehrzahl an Förderbahnen kann als Vorteil der vorliegenden Erfindung der zur Verfügung stehende Raum für die Förderung optimal ausgenutzt werden, was an der Ausführungsform einer erfindungsgemässen Fördereinrichtung 1 in der **Fig. 5** illustriert wird. Auch in diesem Beispiel vollführen die Förderbahnen 2 insgesamt eine 90-Grad-Drehung von einer ersten Förderrichtung F.1 in eine zweite Förderrichtung F.2. Die Förderbahnen 2 sind in diesem konkreten Beispiel aber auf unterschiedlichen Ebenen angeordnet. Konkret ist im vorliegenden Beispiel die in der Bildebene distale Förderbahn oberhalb der folgenden Förderbahnen angeordnet, bis hin zur proximalen Förderbahn, welche am tiefsten angeordnet ist.

Die Förderbahnen der ersten Förderrichtung F.1 sind alle parallel zueinander angeordnet und münden in entsprechende Orientierungseinheiten 8, welche ebenfalls parallel angeordnet sind und der entsprechenden Höhenstapelung der Förderbahnen der ersten Förderrichtung F.1 folgen.

Die Orientierungseinheiten 8 sind mit einem Drehkreuz ausgestattet, das um eine Rotationsachse Z rotierbar ist, , und einem Gehäuse 13, welches eine initiale Führung für die gedrehten Tampon-Applikatoren 100.1, 100.2 ermöglicht. Die Drehelemente 10 sind für eine Drehung in eine erste Drehrichtung Z.1, oder eine zweite Drehrichtung Z.2 um die zentrale Rotationsachse Z angeordnet. Die Förderbahnen sind mittels Förderantrieben 4.1, 4.2 angetrieben, welche Lagerachsen umfassen, die für alle Förderbahnen, die in der gleichen Förderrichtung F.1, F.2 fördern, parallel angeordnet sind. Die Drehrichtung bestimmt sich durch die gewünschte Orientierung der Tampon-Applikatoren auf der zweiten Förderrichtung F.2. Ein Detektor (in der Fig. 5 nicht gezeigt) detektiert die Orientierung der ankommenden Tampon-Applikatoren 100.1, 100.2 und dreht diese um 90-Grad in die erste Drehrichtung Z.1, oder die zweite Drehrichtung Z.2. Im vorliegenden Beispiel werden die Tampon-Applikatoren 100.1, 100.2 in die Orientierung gedreht, bei der das distale proximale Ende des Tampon-Applikators 100.1 in Förderrichtung vorne zu liegen kommt.

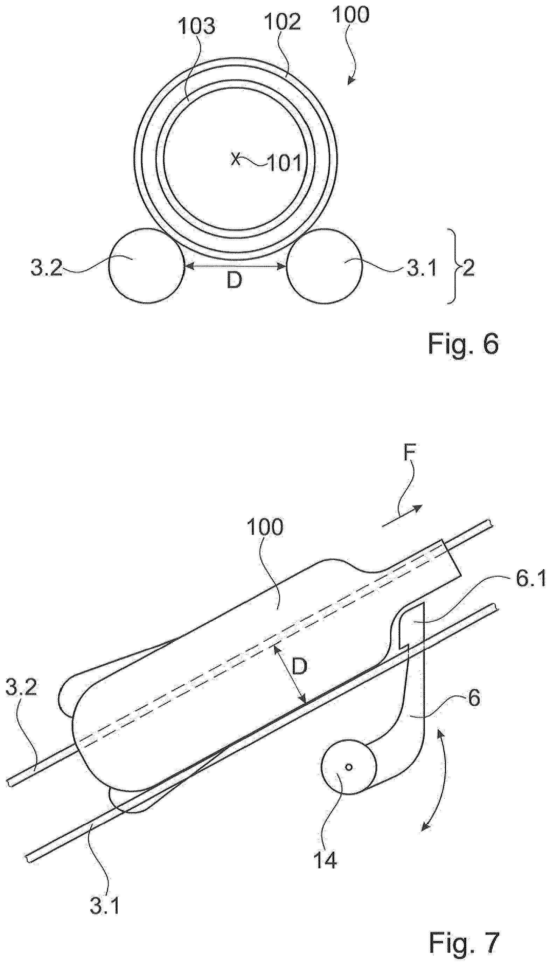

In der **Fig. 6** ist eine Förderbahn 2 im Querschnitt mit einem aufliegenden Tampon-Applikator 100 gezeigt. Der Tampon-Applikator 100 weist einen Tampon-Körper 102 auf, welcher ein Lumen definiert, in welches der Tampon platziert werden kann. Einen geringeren Durchmesser als der Tampon-Körper 102 weist der Stössel 103 auf, der bei Abwesenheit eines Tampons in dieses Lumen eingeführt werden kann. Der gesamte Tampon-Applikator 100 ist im Wesentlichen rotationssymmetrisch um eine zentrale Längsachse 101. Er liegt auf zwei Transportriemen 3.1, 3.2 des Förderbandes auf. Dabei kontaktiert er beide Transportriemen 3.1, 3.2 und erstreckt sich in einen Zwischenraum D zwischen den Transportriemen 3.1, 3.2 dergestalt, dass er zusätzlich zur Auflage eine seitliche Führung aufweist.

Dieser Kontaktbereich liegt im vorliegenden Beispiel in einem Bereich von zwischen 4 und 5 Uhr und 7 und 8 Uhr.

Die **Fig. 7** zeigt eine mögliche Ausführungsform mit der Funktionsweise eines Stoppers 6. Der Stopper ist über einen Stopperkopf 6.1 in der Lage, in einen Zwischenraum D zwischen den Transportriemen 3.1, 3.2 dergestalt einzugreifen, dass er eine Weiterförderung des Tampon-Applikators 100 in die Förderrichtung F unterbindet. Dazu kann er mit einem Stopperaktuator 14 vorgesehen sein, der ein entsprechendes Signal von einem Detektor erhalten, und somit die Zufuhr unterbrechen kann.

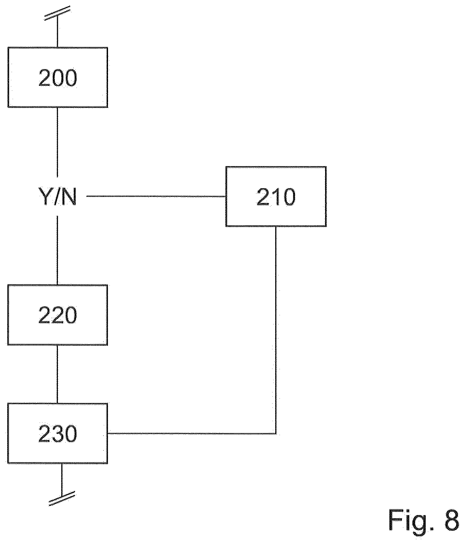

Im Betrieb würde in einer erfindungsgemässen Fördereinrichtung, wie in der **Fig. 8** gezeigt, eine Zufuhr 200 auf einer ersten Förderbahn mit einer bestimmten Orientierung erfolgen. Über einen Detektor wird geprüft, ob die entsprechende Orientierung der gewünschten Orientierung entspricht. Je nachdem, ob die gewünschte Orientierung dies tut, wird eine Drehung in eine erste Drehrichtung 210 oder eine Drehung in eine zweite Drehrichtung 220 vorgenommen, bevor der Tampon-Applikator auf eine zweite Förderbahn mit einer zweiten Förderrichtung 230 übergeben wird.

In einer erfindungsgemässen Ausgestaltung können mehrere der oben genannten Konzepte in einer Fördereinrichtung verwirklicht sein. So kann z.B. eine erfindungsgemässe Fördereinrichtung insgesamt vier parallel verlaufende Förderbahnen in der ersten Förderrichtung umfassen, die einer nachfolgenden Reihe von vier ebenfalls parallel verlaufenden Förderbahnen mit unterschiedlicher Fördergeschwindigkeit anschliessen. Diese wiederum führen die Tampon-Applikatoren in vier Orientierungseinheiten, welche die entsprechende Orientierung korrigieren, wie oben geschildert. Diese gelangen dann wiederum in eine Reihe von vier Förderbahnen, welche eine zweite Förderrichtung aufweisen, die von der ersten um 90 Grad gedreht sein kann. Diese zweite Reihe mündet in einen Pufferbereich, welcher mit einer Serie an Stoppern, sowie mit Detektoren ausgestattet ist um die Zufuhr der sortierten und orientierten Tampon-Applikatoren auf die nächste Bearbeitungsstation, z.B. eine Bestückungseinheit, zu steuern.

Mit der erfindungsgemässen Fördereinrichtung und dem entsprechenden Verfahren wird ein modular anwendbares System zur Förderung von Tampon-Applikatoren bereitgestellt, welches effizient ist und einen sicheren und hygienischen Prozessverlauf für skalierbare Verarbeitungsmengen ermöglicht.

### Bezugszeichenliste

- 1: Fördereinrichtung
- 2: Förderbahn
- 2.1: erster Förderabschnitt
- 2.2: zweiter Förderabschnitt
- 3.1: erster Transportriemen
- 3.2: zweiter Transportriemen
- 4: Förderantrieb
- 4.1: erster Förderantrieb
- 4.2: zweiter Förderantrieb
- 5: Vereinzelungsrolle
- 6: Stopper
- 6.1: Stopper-Kopf
- 8: Orientierungseinheit
- 9: Detektor
- 10: Drehelement
- 11: Grundplatte
- 12: Aufnahmeöffnung
- 13: Gehäuse
- 14: Stopper Aktuator
- 15: Achse
- 16: Welle

- 100: Tampon-Applikator
- 100.1: erster Tampon-Applikator
- 100.2: zweiter Tampon-Applikator
- 101: Längsachse des Tampon-Applikators
- 102: Tamponkörper
- 102.1: Blütenblatt der Kopföffnung
- 102.2: Hülsenkörper
- 102.3: Griffbereich
- 103: Stössel
- 104: distales Ende/Kopföffnung
- 105: proximales Ende/Fadenöffnung

- 200: Zufuhr auf erster Förderbahn
- Y/N: Orientierung B ja/nein?
- 210: Drehung in erste Drehrichtung
- 220: Drehung in zweite Drehrichtung
- 230: Übergabe auf zweite Förderbahn

- A: erste Orientierung"
- B: zweite Orientierung
- D: Zwischenraum zwischen Transportriemen
- F: Förderrichtung
- F.1: erste Förderrichtung
- F.2: zweite Förderrichtung
- L: Lagerachse
- Z: Drehachse
- Z.1: erste Drehrichtung
- Z.2: zweite Drehrichtung
- V1: erste Fördergeschwindigkeit
- V2: zweite Fördergeschwindigkeit

## Patentansprüche

1. **Fördereinrichtung** (1) für Tampon-Applikatoren (100) mit
a. einer **ersten Förderbahn** (2), umfassend zwei voneinander beabstandet angeordnete **Transportriemen** (3.1, 3.2) mit je einer **Lagerachse** (L1, L2);
b. einem ersten **Förderantrieb** (4) zum Antreiben von mindestens einem der zwei voneinander beabstandeten Transportriemen (3.1, 3.2), und wobei
die Transportriemen (3.1, 3.2) derart voneinander beabstandet angeordnet sind, dass ein zu fördernder Tampon-Applikator (100) in einem **Zwischenraum** (D) zwischen den Transportriemen auf beide Transportriemen (3.1, 2.2) aufliegt;
die Lagerachsen (L1, L2) der Transportriemen (3.1, 3.2) einer Förderbahn parallel angeordnet sind, insbesondere sind alle Lagerachsen (L1, L2) der Transportriemen (3.1, 3.2) welche in eine gleiche Förderrichtung (F.1, F.2) fördern parallel angeordnet;
c. eine der ersten Förderbahn nachgelagerte Orientierungseinheit (8) zur Drehung eines zugeführten Tampon-Applikators (100) von einer ersten Orientierung (A) in eine zweite Orientierung (B), und
**dadurch gekennzeichnet, dass**
die Orientierungseinheit (8) eine Grundplatte (11) umfasst, und wobei die Grundplatte (11) eine Ausnehmung (12) aufweist, durch welche ein sich ein, in einer bestimmten, zweiten Orientierung (B) befindlicher Tampon-Applikator (100) längsseitig hindurchfallen kann.

2. Fördereinrichtung gemäss Anspruch 1, wobei die Orientierungseinheit (8) zwischen zwei hintereinander angeordneter Förderbahnen (2) angeordnet ist, so dass sie einen in einer ersten Orientierung (A) zur Orientierungseinheit (8) von der ersten Fördereinheit (2) geförderten Tampon-Applikator (100), in eine zweite Orientierung (B) zur Weiterförderung auf einer zweiten Fördereinheit (2) zu Drehen vermag.

3. Fördereinrichtung gemäss Anspruch 2, wobei die Orientierungseinheit (8) zudem so zwischen hintereinander angeordneten Förderbahnen (2) angeordnet ist, dass sie einen in einer ersten Förderrichtung (F.1) zur Orientierungseinheit (8) von der ersten Fördereinheit (2) geförderten Tampon-Applikator (100), in eine zweite Förderrichtung (F.2) zur Weiterförderung auf einer zweiten Fördereinheit (2) zu Drehen vermag.

4. Fördereinrichtung gemäss einem der Ansprüche 1 bis 3, wobei die erste Förderbahn auf einer ersten Förderebene angeordnet ist, und mindestens eine weitere Förderbahn auf mindestens einer zweiten Förderebene angeordnet ist.

5. Fördereinrichtung gemäss einem der Ansprüche 1 bis 4, wobei die Orientierungseinheit (8) weiter ein Drehelement (10) zur Aufnahme eines Tampon-Applikators (100), insbesondere ein als Drehkreuz ausgestaltetes Drehelement (10), umfasst, welches zwischen mindestens zwei Ausrichtungen drehbar gelagert ist.

6. Fördereinrichtung gemäss einem der Ansprüche 1 bis 5, umfassend eine Mehrzahl an Förderbahnen (2), insbesondere eine Mehrzahl an parallel angeordneten Förderbahnen (2) und/oder eine Mehrzahl an in Förderrichtung hintereinander angeordneter Förderbahnen (2) umfassend.

7. Fördereinrichtung gemäss Anspruch 6, wobei die Mehrzahl an parallel angeordneten Förderbahnen (2) und/oder die Mehrzahl an in Förderrichtung hintereinander angeordneter Förderbahnen (2) parallele Lagerachsen, welche als Antriebswellen ausgebildet sind und mit einem Antrieb gekoppelt antreibbar sind.

8. Fördereinrichtung gemäss Anspruch 7, umfassend mindestens zwei in Förderrichtung hintereinander angeordneter Förderbahnen (2), welche einen Winkel zueinander einschliessen, insbesondere einen Winkel von zwischen 30° und zwischen 120° zueinander einschliessen.

9. Fördereinrichtung gemäss einem der Ansprüche 1 bis 8, wobei die Transportriemen (3.1, 3.2) im Querschnitt senkrecht zu ihrer Längsachse symmetrisch sind, insbesondere als Rundriemen ausgestaltet sind.

10. Fördereinrichtung gemäss einem der Ansprüche 1 bis 9, weiter umfassend mindestens eine Vereinzelungsrolle (5), welche so an der Förderbahn angeordnet ist, dass sie in einen Zwischenraum zwischen die zwei voneinander beabstandeten Transportriemen (3.1, 3.2) eingreift.

11. Fördereinrichtung gemäss einem der Ansprüche 1 bis 10, weiter umfassend mindestens einen Stopper (6), welcher so an der Förderbahn angeordnet ist, dass er in einen Zwischenraum zwischen die zwei voneinander beabstandeten Transportriemen (3.1, 3.2) eingreift.

12. Fördereinrichtung gemäss einem der Ansprüche 1 bis 11, umfassend mindestens einen Ejektor zur Beförderung eines Tampon-Applikators von einem Ende einer Förderbahn in eine anschliessende Bearbeitungseinheit, insbesondere eine nachgelagerte Orientierungseinheit, wobei der Ejektor so an der Förderbahn angeordnet ist, dass er in einen Zwischenraum zwischen die zwei voneinander beabstandeten Transportriemen (3.1, 3.2) eingreift.

13. Fördereinrichtung gemäss einem der Ansprüche 1 bis 12, wobei der Förderantrieb (4) über eine Welle (16), welche parallel zu den Lagerachsen (L1, L2) der Transportriemen (3.1, 3.2) angeordnet ist, diese antreibt.

14. Verfahren zum Fördern von Tampon-Applikatoren (100) mit einer Fördereinrichtung (1) gemäss einem der Ansprüche 1 bis 13, umfassend die Schritte:
a. **Bereitstellen** mindestens eines Tampon-Applikators (100), insbesondere eines losen Guts von Tampon-Applikatoren (100);
b. **Zuführen** von Tampon-Applikatoren (100) auf eine erste Förderbahn (2) mit zwei voneinander beabstandet angeordneten Transportriemen (3.1, 3.2), so dass der zu fördernde Tampon-Applikator (100) in einem Zwischenraum zwischen den Transportriemen auf beide Transportriemen (3.1, 2.2) aufliegt;
c. **Fördern** der Tampon-Applikatoren (100) in eine Förderrichtung.

15. Verfahren gemäss Anspruch 14, wobei Tampon-Applikatoren (100) zunächst auf einer ersten Förderbahn (2) in einer ersten Förderrichtung gefördert werden und anschliessend auf einer zweiten Förderbahn (2) in einer zweiten Förderrichtung gefördert werden.

16. Verfahren gemäss Anspruch 15, wobei zwischen der ersten Förderbahn (2) und der zweiten Förderbahn (2) eine Drehung eines Tampon-Applikators von einer ersten Orientierung (A) in eine zweite Orientierung (B) erfolgt, insbesondere mittels einer der ersten Förderbahn nachgelagerten Orientierungseinheit (8).

## Claims

1. **A conveying apparatus** (1) for tampon applicators (100), having
a. a **first conveyor track** (2), comprising two **transport belts** (3.1, 3.2) which are arranged spaced apart from each other and each have a **bearing axis** (L1, L2);
b. a first **conveyor drive** (4) for driving at least one of the two spaced-apart transport belts (3.1, 3.2), and wherein
the transport belts (3.1, 3.2) are arranged spaced apart from each other in such a manner that a tampon applicator (100) which is to be conveyed rests on the two transport belts (3.1, 3.2) in an **intermediate space** (D) between the transport belts;
the bearing axes (L1, L2) of the transport belts (3.1, 3.2) of a conveyor track are arranged parallel; in particular, all of the bearing axes (L1, L2) of the transport belts (3.1, 3.2) which convey in a same conveying direction (F.1, F.2) are arranged parallel;
c. an orientation unit (8) which is mounted downstream of the first conveyor track, for rotating a supplied tampon applicator (100) from a first orientation (A) into a second orientation (B), and
**characterized in that**
the orientation unit (8) comprises a baseplate (11), and wherein the baseplate (11) has a recess (12) through which a tampon applicator (100) which is in a certain, second orientation (B) can drop lengthwise.

2. The conveying apparatus as claimed in claim 1, wherein the orientation unit (8) is arranged between two consecutively arranged conveyor tracks (2) such that it is capable of rotating a tampon applicator (100), which is conveyed in a first orientation (A) to the orientation unit (8) by the first conveyor unit (2), into a second orientation (B) for further conveying on a second conveyor unit (2).

3. The conveying apparatus as claimed in claim 2, wherein the orientation unit (8) is also arranged between consecutively arranged conveyor tracks (2) in such a manner that it is capable of rotating a tampon applicator (100), which is conveyed in a first conveying direction (F.1) to the orientation unit (8) by the first conveyor unit (2), into a second conveying direction (F.2) for further conveying on a second conveyor unit (2).

4. The conveying apparatus as claimed in one of claims 1 to 3, wherein the first conveyor track is arranged on a first conveying plane, and at least one further conveyor track is arranged on at least one second conveying plane.

5. The conveying apparatus as claimed in one of claims 1 to 4, wherein the orientation unit (8) furthermore comprises a rotary element (10) for receiving a tampon applicator (100), in particular a rotary element (10) which is configured as a turnstile and is mounted rotatably between at least two orientations.

6. The conveying apparatus as claimed in one of claims 1 to 5, comprising a plurality of conveyor tracks (2), in particular a plurality of parallel conveyor tracks (2) and/or comprising a plurality of conveyor tracks (2) arranged consecutively in the conveying direction.

7. The conveying apparatus as claimed in claim 6, wherein the plurality of parallel conveyor tracks (2) and/or the plurality of conveyor tracks (2) arranged consecutively in the conveying direction parallel bearing axes which are designed as drive shafts and can be driven in a manner coupled to a drive.

8. The conveying apparatus as claimed in claim 7, comprising at least two conveyor tracks (2) which are arranged consecutively in the conveying direction and enclose an angle with respect to one another, in particular enclose an angle of between 30° and between 120° with respect to one another.

9. The conveying apparatus as claimed in one of claims 1 to 8, wherein the transport belts (3.1, 3.2) are symmetrical in cross section perpendicularly to their longitudinal axis, in particular are configured as round belts.

10. The conveying apparatus as claimed in one of claims 1 to 9, furthermore comprising at least one separating roller (5) which is arranged on the conveyor track in such a manner that it engages in an intermediate space between the two spaced-apart transport belts (3.1, 3.2).

11. The conveying apparatus as claimed in one of claims 1 to 10, furthermore comprising at least one stopper (6) which is arranged on the conveyor track in such a manner that it engages in an intermediate space between the two spaced-apart transport belts (3.1, 3.2).

12. The conveying apparatus as claimed in one of claims 1 to 11, comprising at least one ejector for conveying a tampon applicator from one end of a conveyor track into an adjoining processing unit, in particular an orientation unit mounted downstream, wherein the ejector is arranged on the conveyor track in such a manner that it engages in an intermediate space between the two spaced-apart transport belts (3.1, 3.2).

13. The conveying apparatus as claimed in one of claims 1 to 12, wherein the conveyor drive (4) drives the transport belts (3.1, 3.2) via a shaft (16) which is arranged parallel to the bearing axes (L1, L2) of said transport belts (3.1, 3.2).

14. A method of conveying tampon applicators (100) with a conveying apparatus (1) as claimed in one of claims 1 to 13, comprising the steps of:
a. **providing** at least one tampon applicator (100), in particular a loose article of tampon applicators (100);
b. **supplying** tampon applicators (100) onto a first conveyor track (2) with two spaced-apart transport belts (3.1, 3.2) such that the tampon applicator (100) which is to be conveyed rests on the two transport belts (3.1, 2.2) in an intermediate space between the transport belts;
c. **conveying** the tampon applicators (100) in a conveying direction.

15. The method as claimed in claim 14, wherein tampon applicators (100) are first of all conveyed on a first conveyor track (2) in a first conveying direction and are subsequently conveyed on a second conveyor track (2) in a second conveying direction.

16. The method as claimed in claim 15, wherein, between the first conveyor track (2) and the second conveyor track (2), a tampon applicator is rotated from a first orientation (A) into a second orientation (B), in particular by means of an orientation unit (8) mounted downstream of the first conveyor track.

## Revendications

1. Appareil de convoyage (1) destiné à des applicateurs de tampon (100), ledit appareil de convoyage comportant
a. une première voie de convoyage (2), comprenant deux bandes transporteuses (3.1, 3.2) qui sont disposées en étant espacées l'une de l'autre et qui comporte chacune un axe porteur (L1, L2) ;
b. un premier entraînement de convoyeur (4) destiné à entraîner au moins une des deux bandes transporteuses (3.1, 3.2) espacées l'une de l'autre, et
les bandes transporteuses (3.1, 3.2) étant disposées en étant espacées l'une de l'autre de manière à ce qu'un applicateur de tampon (100) qui doit être transporté vienne en appui sur les deux bandes transporteuses (3.1, 3.2) dans un espace intermédiaire (D) ménagé entre les bandes transporteuses ;
les axes porteurs (L1, L2) des bandes transporteuses (3.1, 3.2) d'une voie de convoyage sont disposés en parallèle ; en particulier, tous les axes porteurs (L1, L2) des bandes transporteuses (3.1, 3.2) qui effectuée un convoyage dans une même direction de transport (F.1, F.2) sont disposés en parallèle ;
c. une unité d'orientation (8) qui est montée en aval de la première voie de convoyage et qui est destinée à faire tourner un applicateur de tampon fourni (100) d'une première orientation (A) à une deuxième orientation (B), et
**caractérisé en ce que**
l'unité d'orientation (8) comprenant une plaque de base (11), et la plaque de base (11) comportant un évidement (12) à travers lequel un applicateur de tampon (100) qui est dans une certaine deuxième orientation (B) peut tomber dans le sens de la longueur.

2. Appareil de convoyage selon la revendication 1, l'unité d'orientation (8) étant disposée entre deux voies de convoyage (2) disposées consécutivement de manière à ce qu'elle soit capable de faire tourner un applicateur de tampon (100), qui est convoyé dans une première orientation (A) vers l'unité d'orientation (8) par la première unité de convoyage (2), dans une deuxième orientation (B) destinée à un convoyage ultérieur sur une deuxième unité de convoyage (2).

3. Appareil de convoyage selon la revendication 2, l'unité d'orientation (8) étant également disposée entre des voies de convoyage (2) disposées consécutivement de manière à ce qu'elle soit capable de faire tourner un applicateur de tampon (100), qui est convoyé dans une première direction de convoyage (F.1) vers l'unité d'orientation (8) par la première unité de convoyage (2), dans une deuxième direction de convoyage (F.2) destinée à un convoyage ultérieur sur une deuxième unité de convoyage (2).

4. Appareil de convoyage selon l'une des revendications à 3, la première voie de convoyage étant disposée dans un premier plan de convoyage, et au moins une autre voie de convoyage étant disposée dans au moins un deuxième plan de convoyage.

5. Appareil de convoyage selon l'une des revendications 1 à 4, l'unité d'orientation (8) comprenant en outre un élément rotatif (10) destiné à recevoir un applicateur de tampon (100), en particulier un élément rotatif (10) qui est conçu comme un tourniquet et qui est monté à rotation entre au moins deux orientations.

6. Appareil de convoyage selon l'une des revendications 1 à 5, comprenant une pluralité de voies de convoyage (2), en particulier une pluralité de voies de convoyage parallèles (2) et/ou comprenant une pluralité de voies de convoyage (2) disposées consécutivement dans la direction de convoyage.

7. Appareil de convoyage selon la revendication 6, la pluralité de voies de convoyage parallèles (2) et/ou la pluralité de voies de convoyage (2) étant disposées consécutivement dans la direction de transport parallèlement à des axes porteurs qui sont conçus comme des arbres d'entraînement et qui peuvent être entraînés de manière accouplée à un entraînement.

8. Appareil de convoyage selon la revendication 7, comprenant au moins deux voies de convoyage (2) disposées consécutivement dans la direction de convoyage et faisant un angle l'une par rapport à l'autre, en particulier faisant un angle compris entre 30° et 120° les unes par rapport aux autres.

9. Appareil de convoyage selon l'une des revendications 1 à 8, les bandes transporteuses (3.1, 3.2) étant symétriques en coupe transversale perpendiculairement à leur axe longitudinal, en particulier étant conçues comme des bandes rondes.

10. Appareil de convoyage selon l'une des revendications 1 à 9, comprenant en outre au moins un galet séparateur (5) qui est disposé sur la voie de convoyage de manière à ce qu'il s'engage dans un espace intermédiaire ménagé entre les deux bandes transporteuses (3.1, 3.2) espacées l'une de l'autre.

11. Appareil de convoyage selon l'une des revendications 1 à 10, comprenant en outre au moins une butée (6) qui est disposée sur la voie de convoyage de manière à ce qu'elle s'engage dans un espace intermédiaire ménagé entre les deux bandes transporteuses (3.1, 3.2) espacées l'une de l'autre.

12. Appareil de convoyage selon l'une des revendications 1 à 11, comprenant au moins un éjecteur destiné à convoyer un applicateur de tampon d'une extrémité d'une voie de convoyage dans une unité de traitement attenante, en particulier une unité d'orientation montée en aval, l'éjecteur étant disposé sur la voie de convoyage de manière à ce qu'il s'engage dans un espace intermédiaire ménagé entre les deux bandes transporteuses (3.1, 3.2) espacées l'une de l'autre.

13. Appareil de convoyage selon l'une des revendications 1 à 12, l'entraînement de convoyage (4) entraînant les bandes transporteuses (3.1, 3.2) par le biais d'un arbre (16) qui est disposé parallèlement aux axes porteurs (L1, L2) desdites bandes transporteuses (3.1, 3.2).

14. Procédé de convoyage d'applicateurs de tampon (100) à l'aide d'un appareil de convoyage (1) selon l'une des revendications 1 à 13, ledit procédé comprenant les étapes suivantes :
a. fournir au moins un applicateur de tampon (100), en particulier un article lâche d'applicateurs de tampon (100) ;
b. amener des applicateurs de tampon (100) sur une première voie de convoyage (2) avec deux bandes transporteuses (3.1, 3.2) espacées l'une de l'autre de sorte que l'applicateur de tampon (100) qui doit être transporté vienne en appui sur les deux bandes transporteuses (3.1, 2.2) dans un espace intermédiaire ménagé entre les bandes transporteuses ;
c. convoyer les applicateurs de tampon (100) dans une direction de convoyage.

15. Procédé selon la revendication 14, des applicateurs de tampon (100) étant tout d'abord convoyés sur une première voie de convoyage (2) dans une première direction de convoyage et étant ensuite convoyés sur une deuxième voie de convoyage (2) dans une deuxième direction de convoyage.

16. Procédé selon la revendication 15, entre la première voie de convoyage (2) et la deuxième voie de convoyage (2), un applicateur de tampon étant tourné d'une première orientation (A) dans une deuxième orientation (B), en particulier au moyen d'une unité d'orientation (8) montée en aval de la première voie de convoyage.
